# EUROPÄISCHE PATENTSCHRIFT

(11) **EP 1 304 818 B1**
(45) Veröffentlichungstag und Bekanntmachung des Hinweises auf die Patenterteilung: **05.08.2009**
(21) Anmeldenummer: 01124939.8
(22) Anmeldetag: 18.10.2001
(51) Int. Cl.: H04B 7/26

(54) **Verfahren zum Signalisieren von Zuordnungen zwischen CDMA-Codes und Lernsequenzen bei TDD-Mobilfunksystemen**
Method of signalling the correspondence between CDMA codes and training sequences in TDD mobile radio systems
Procédé de signalisation de la correspondance entre codes AMRC et séquences d'apprentissage dans des systèmes de radio mobiles à duplex par répartition dans le temps

(43) Veröffentlichungstag der Anmeldung: 23.04.2003
(73) Patentinhaber: SIEMENS AKTIENGESELLSCHAFT, 80333 München (DE)
(72) Erfinder: Berg, Stefan, 46397 Bocholt (DE); Karger, Stephan, 46499 Haminkeln (DE); Landenberger, Holger, Dr., 46395 Bocholt (DE); Schmidt, Malte, 46419 Isselburg (DE); Seraji, Gholam-Ali, Dr., D-46397 Bocholt (DE); Theisen, Rolf, 46397 Bocholt (DE)

(56) Entgegenhaltungen:
- WO-A-01/28104
- WO-A-01/58041
- WO-A-01/63775
- GB-A- 2 351 422
- MAYER ET AL.: "Protocol and signalling aspects of joint detection CDMA" PERSONAL, INDOOR AND MOBILE RADIO COMMUNICATIONS, 1. - 4. September 1997, Seiten 867-871, XP010247572 ISBN: 0-7803-3871-5
- KOURTIS: "New UTRA-TDD system characteristics" INTERNATIONAL CONFERENCE ON 3G MOBILE COMMUNICATION TECHNOLOGIES, 26. - 28. März 2001, Seiten 161-165, XP002193731 London, UK
- MAYER : "Realtime feasibility of joint detection CDMA" EUROPEAN PERSONAL MOBILE COMMUNICATIONS CONFERENCE /ITG FACHTAGUNG, Nr. 145, 30. September 1997 (1997-09-30) - 2. Oktober 1997 (1997-10-02), Seiten 245-252, XP002112135

## Beschreibung

Verfahren zum Signalisieren von Zuordnungen zwischen CDMA-Codes und Lernsequenzen bei TDD-Mobilfunksystemen

Die Erfindung bezieht sich auf ein Verfahren zum Betrieb eines Mobilfunksystems mit einer Basisstation und mehreren, der Basisstation zugeordneten Mobilkommunikationsendgeräten, denen jeweils mindestens eine Lernsequenz zur Schätzung von Eigenschaften eines zwischen dem der Lernsequenz zugeordneten Kommunikationsendgerät und einer gemeinsamen Basisstation vorliegenden physikalischen Kanals zugeordnet ist, wobei jeder Lernsequenz mindestens ein CDMA-Code zugeordnet ist und jedem Mobilkommunikationsendgerät seine eigenen, verwendeten CDMA-Codes und seine mindestens eine Lernsequenz bekannt ist.

Die mindestens eine Lernsequenz kann von dem Mobilkommunikationsendgerät aus den empfangenen CDMA-Codes abgeleitet werden, wobei es auch möglich ist, dass ein Mobilkommunikationsendgerät nur einen einzigen CDMA-Code verwendet. Alternativ ist es möglich, dass dem Mobilkommunikationsendgerät seine Lernsequenz(en) signalisiert werden.

Ein solches Verfahren dient zur Verwaltung der innerhalb einer Mobilfunkzelle befindlichen Mobilkommunikationsendgeräte, insbesondere der zur Verfügung stehenden CDMA-Codes, die jeweiligen Lernsequenzen, die auch Midamble genannt werden, zugeordnet sind. Die UMTS-Standards TDD (3.84Mcps und 1.28Mcps) sowie der CWTS-Standard TSM, der auf dem Übertragungsverfahren TD-SCDMA basiert, arbeiten mit derzeit insgesamt drei Standards zur Zuordnung von Lernsequenzen zu CDMA-Codes.

Bei dem sog. "Default Midamble Allocation Scheme" sind vorab Informationen über Zuordnungen zwischen den CDMA-Codes zu den Bei dem sog. "Default Midamble Allocation Scheme" sind vorab Informationen über Zuordnungen zwischen den CDMA-Codes zu den Lernsequenzen festgelegt. Für jede mögliche Anzahl von Lernsequenzen, die innerhalb einer Funkzelle, die von der Basisstation versorgt wird, benutzt wird, steht fest, welche Lernsequenz mit welchen CDMA-Codes verwendet wird. Bei dem sog. "Common Midamble Allocation Scheme" wird in einer Mobilfunkzelle immer nur eine gemeinsame Lernsequenz benutzt. Für jede mögliche Lernsequenz ist die Anzahl der in der Mobilfunkzelle verwendeten CDMA-Codes definiert.

Den beiden vorgenannten Zuordnungsschemata ist somit gemeinsam, daß eine Zuordnung zwischen Lernsequenzen und den Lernsequenzen zugehörigen CDMA-Codes und die Anzahl der einer Lernsequenz zugehörigen CDMA-Codes in der Zeit unverändert bleibt. Dies ist bei einem weiteren Schema, dem für einzelne Mobilkommunikationsendgeräte spezifischen "Layer 2/3 Midamble Allocation Scheme" nicht der Fall, denn bei diesem Zuordnungsschema wird der Tatsache Rechnung getragen, daß es aufgrund eines bestimmten Datenaufkommens bei einem Mobilkommunikationsendgerät, dem eine bestimmte Lernsequenz zugeordnet ist, erforderlich sein kann, eine Lernsequenz hinsichtlich der Anzahl der ihr zugeordneten CDMA-Codes zu verändern. Wenn beispielsweise in einem Ausgangszustand zwei Lernsequenzen jeweils zwei CDMA-Codes zugeordnet sind, kann auf eine Zuordnung gewechselt werden, bei der der ersten Lernsequenz drei und der zweiten Lernsequenz nur noch ein CDMA-Code zugeordnet ist. Auf diese Weise wird dem Mobilkommunikationsendgerät, das mit der ersten Lernsequenz arbeitet, ermöglicht, ein erhöhtes Datenvolumen im Uplink an eine Basisstation zu übertragen oder im Downlink von einer Basisstation zu empfangen.

Bei den o. g. Standards zum Betrieb von Mobilfunksystemen wird als bevorzugtes Empfängerkonzept das sog. Joint-Detection-Verfahren angesehen. Dieses Empfangsverfahren zeichnet sich dadurch aus, daß an einem Mobilkommunikationsendgerät die Signale für sämtliche Mobilkommunikationsendgeräte, die einer gemeinsamen Basisstation zugeordnet sind, empfangen und gemeinsam entzerrt werden, um auf diese Weise eine geringere Bit-Fehlerrate für die Datenbits des eigenen Signals des Mobilkommunikationsendgerätes zu erzielen.

Zur Verwendung des Joint-Detection-Verfahrens sind jedoch einige Voraussetzungen zu erfüllen. Am Mobilkommunikationsendgerät, bei dem das Joint-Detection-Verfahren durchzuführen ist, müssen Informationen über sämtliche, in der Funkzelle verwendete CDMA-Codes vorhanden sein. Des weiteren ist es notwendig, daß ein Mobilkommunikationsendgerät zur Durchführung des Joint-Detection-Verfahrens eine Kanalschätzung für denjenigen physikalischen Mobilfunk-Kanal durchführen kann, über den irgendein CDMA-Code, d. h. sowohl eigene als auch fremde CDMA-Codes, das Mobilkommunikationsendgerät erreicht hat.

Die vorher erwähnten, zur Durchführung des Joint-Detection-Verfahrens erforderlichen Informationen liegen insbesondere im Falle des "Layer 2/3 Midamble Allocation Scheme" nicht vor. Denn das Mobilkommunikationsendgerät verfügt nur über Informationen, die es selbst betrifft, d. h. ihm sind seine eigenen, verwendeten CDMA-Codes sowie seine eigene Lernsequenz bekannt. Informationen über weitere, der gemeinsamen Basisstation zugeordnete Mobilkommunikationsendgeräte, insbesondere deren Zuordnungen zwischen CDMA-Codes und Lernsequenzen, sind unbekannt.

Aus der GB 2 351 422 ist ein Verfahren zur Zuordnung von Lernsequenzen zu Kanalisierungscodes in einem mobilen Telekommunikationssystem bekannt. Mit Hilfe von Regeln wird es dem mobilen Kommunikationsendgerät gestattet, auf gerade verwendete Kanalisierungscodes rückzuschließen, um ein Joint Detection-Verfahren durchführen zu können.

Aus dem Fachartikel "New Utra-TDD System Characteristics", veröffentlicht in 3G Mobile Communication Technologies, 26 - 28 March 2001, Conference Publication No. 477 © IEE 2001, ist es bekannt, bei UTRA-TDD-Systemen auf gerade verwendete Codes rückzuschließen, indem auf eine bekannte Verknüpfung zwischen Lernsequenzen und Kanalisierungscodes zurückgegriffen wird. Außerdem wird eine mögliche Signalisierung gerade aktiver Codes an das mobile Kommunikationsendgerät angesprochen, wobei von dieser Vorgehensweise abgeraten wird.

Ausgehend hiervon liegt der Erfindung die Aufgabe zugrunde, ein Verfahren zum Feststellen der zur Durchführung des Joint-Detection-Verfahrens benötigten Informationen bereit zu stellen.

Diese Aufgabe wird bei dem eingangs genannten Verfahren zum Betrieb eines UMTS-TDD- oder TSM-Mobilfunksystems dadurch gelöst, daß zum Feststellen von während des Betriebs des Mobilfunksystems gerade verwendeten CDMA-Codes mindestens einem Mobilkommunikationsendgerät eine zeitlich variierende Zuordnungen zwischen gerade verwendeten CDMA-Codes und Lernsequenzen für weitere Mobilkommunikationsendgeräte, die der gemeinsamen Basisstation zugeordnet sind, signalisiert werden.

Auf diese Weise wird gewährleistet, daß jedes Mobilkommunikationsendgerät innerhalb einer Funkzelle mit einer gemeinsamen Basisstation über sämtliche erforderlichen Informationen zur Durchführung des Joint-Detection-Verfahrens verfügt. Zur gemeinsamen Entzerrung empfangener Basisstationssignale sind einem beliebigen Mobilkommunikationsendgerät aus der Funkzelle sämtliche CDMA-Codes, die gerade in der Funkzelle verwendet werden, bekannt. Zudem verfügt das Mobilkommunikationsendgerät auch über die konkreten Strukturen sämtlicher in der Funkzelle verwendeter Lernsequenzen, so daß die einzelnen Lernsequenzen zur Schätzung der Impulsantworten der benutzten physikalischen Kanäle verwendet werden können.

Die Zuordnungen zwischen Lernsequenzen und CDMA-Codes ist zeitlich variierend, wobei, ausgehend von Ausgangszuordnungen zwischen den Lernsequenzen und den CDMA-Codes, die Variationen in den Zuordnungen mindestens einem Mobilkommunikationsendgerät, das der gemeinsamen Basisstation zugeordnet ist und das Joint-Detection-Verfahren durchführen soll, signalisiert werden. Dies betrifft den Fall, daß das Schicht 2/3 - benutzerspezifische "Midamble Allocation Scheme" zum Einsatz kommt, bei dem sich im Laufe der Zeit die Zuordnungen zwischen Lernsequenzen und zugewiesenen CDMA-Codes verändern können, wie eingangs angesprochen. Wenn bei einem Mobilkommunikationsendgerät durch die beschriebene Signalisierung Zuordnungsinformationen über Lernsequenzen und CDMA-Codes vorliegen, müssen diese von Zeit zu Zeit aktualisiert werden. Dies geschieht durch entsprechende Signalisierung, beispielsweise von der Basisstation aus.

Die Variation der Zuordnungen zwischen Lernsequenzen und CDMA-Codes kann sämtlichen, einer gemeinsamen Basisstation zugeordneten Mobilkommunikationsendgeräten gleichzeitig signalisiert werden, wobei bevorzugt der UMTS-Broadcast-Kanal oder der UMTS-FACH-Kanal von der Basisstation zur Signalisierung genutzt werden kann. Diese hat den Vorteil, daß sämtliche Mobilkommunikationsendgeräte in einer Funkzelle die erforderlichen Informationen zur Durchführung des Joint-Detection-Verfahrens gleichzeitig erhalten und daß die Informationen nur einmal zu übertragen sind.

Alternativ können die Mobilkommunikationsendgeräte, die der gemeinsamen Basisstation zugeordnet sind, im Bedarfsfall die Signalisierung einer Variation der Zuordnungen zwischen Lernsequenzen und CDMA-Codes anfordern. Dies hat den Vorteil, daß die erforderlichen Informationen nur denjenigen Mobilkommunikationsendgeräten übermittelt werden, die sie tatsächlich benötigen. Wenn in einer Funkzelle Mobilkommunikationsendgeräte vorhanden sind, die keinen Empfänger für das Joint-Detection-Verfahren verwenden, gerade nichts empfangen oder einen Zeitschlitz empfangen, in dem ausschließlich das Default-Schema verwendet wird, benötigen diese Mobilkommunikationsendgeräte die Informationen nicht.

Bei der Signalisierung der Informationen auf Abfrage ist es vorteilhaft, daß ausschließlich die Mobilkommunikationsendgeräte mit einem Empfänger für Joint Detection die Informationen erhalten. Die Informationen über die Zuordnungen zwischen Lernsequenzen und CDMA-Codes können über geeignete Übertragungstechniken, wie Beamforming, nur in die Richtung des nachfragenden Mobilkommunikationsendgerätes geschickt werden, ohne in der gesamten Funkzelle andere Benutzer von Mobilkommunikationsendgeräten zu beeinträchtigen. Außerdem können die Informationen zielgerichtet übertragen werden, da beispielsweise nur diejenige Information über die Zeitschlitze übertragen wird, die das betreffende Mobilkommunikationsendgerät auch empfangen muß.

Generell sollte die Signalisierung der Informationen nicht ständig erfolgen, sondern die Gültigkeit einer bestehenden Zuordnung zwischen Lernsequenzen und CDMA-Codes bis zur nächsten Änderung der verwendeten CDMA-Codes bestehen bleiben.

In dem Fall, wenn nicht benötigte CDMA-Codes von der Basisstation nicht gesendet werden, obwohl sie in den Zuordnungen zwischen Lernsequenzen und CDMA-Codes vorhanden sind, wird bevorzugt durch das Mobilkommunikationsendgerät festgestellt, ob die signalisierten Zuordnungen von Lernsequenzen zu CDMA-Codes tatsächlich verwendet werden. Dies wird durch das Mobilkommunikationsendgerät bevorzugt durch Korrelation (Leitungsschätzung) festgestellt.

Vorzugsweise kann durch Signalisieren einer Zeitschlitzkonfiguration einem Mobilkommunikationsendgerät eine Zuordnungsliste zwischen in einer Funkzelle vorhandenen Lernsequenzen mit jeweils zugeordneten CDMA-Codes übermittelt werden. Jeder Zeitschlitzkonfiguration ist eine bestimmte Verteilung der möglichen CDMA-Codes auf die vorhandenen Lernsequenzen zugeordnet. Bevorzugt ist die Zuordnung zwischen Lernsequenzen und CDMA-Codes strukturiert, wobei mit zunehmender Lernsequenznummer die Anzahl der der Lernsequenz zugeordneten CDMA-Codes zunehmen kann. Auf diese Weise wird nicht jede mögliche Permutation von CDMA-Codes mit einer Lernsequenz berücksichtigt, sondern nur eine minimal erforderliche Anzahl von Kombinationsmöglichkeiten. Dadurch bleibt die vollständige Flexibilität des Mobilfunksystems erhalten. Dabei kann eine Zeitschlitzkonfiguration als Ausgangs-Konfiguration voreingestellt sein.

Somit ist vorzugsweise jeder Zuordnung von Lernsequenzen zu CDMA-Codes eine bestimmte Zeitschlitzkonfiguration zugeordnet.

Die Erfindung wird nachfolgend anhand von Ausführungsbeispielen noch näher erläutert.

In einer Mobilfunkzelle, die Beamforming einsetzt, sind aus Gründen der Geometrie der Funkzelle insgesamt acht Midamble als Lernsequenzen möglich, die unterschiedlichen Mobilkommunikationsendgeräten zugewiesen sind, um sie optimal zu trennen. Im Ausgangs-(Default-)Schema sind zwei CDMA-Codes für eine Lernsequenz vorgesehen, denn es werden die oben beschriebenen TDD-Systeme zugrunde gelegt, die derzeit maximal sechzehn CDMA-Codes aufweisen.

Zunächst verwenden sämtliche Mobilkommunikationsendgeräte jeweils zwei CDMA-Codes mit genau einer Lernsequenz. Mit acht Mobilkommunikationsendgeräten ist die Funkzelle damit optimal ausgelastet und sämtliche Mobilkommunikationsendgeräte lassen sich durch Beamforming in günstiger Weise trennen.

Wenn nun ein Mobilkommunikationsendgerät drei CDMA-Codes benutzt, so würden im Default-Midamble-Allocation-Schema zwei Lernsequenzen für diese Mobilkommunikationsendgerät verwendet werden. Der eine verbleibende CDMA-Code der Lernsequenz, die einen ihrer CDMA-Codes an die Lernsequenz des nunmehr drei CDMA-Codes benutzenden Mobilkommunikationsendgerätes abgegeben hat, kann zwar einem anderen Mobilkommunikationsendgerät bereit gestellt werden. Dies ist allerdings nur dann möglich, wenn die verwendete Strahlcharakteristik, d. h. die Senderichtung der Basisstation, beide Mobilkommunikationsendgeräte einschließt. Eine Trennung der Mobilkommunikationsendgeräte durch Beamforming ist dann jedoch nicht mehr möglich. Durch die Schicht 2/3-Signalisierung kann nun, ausgehend von dem Default-Schema, die Zuordnung zwischen Lernsequenzen und CDMA-Codes so geändert werden, daß das Mobilkommunikationsendgerät, das zunächst zwei und nunmehr drei CDMA-Codes benutzt, sämtliche CDMA-Codes mit seiner ursprünglichen Lernsequenz verwendet. Ein Mobilkommunikationsendgerät, das den einzelnen, verbleibenden CDMA-Code benutzt, erhält somit seine eigene Lernsequenz, was es gestattet, die beiden Mobilkommunikationsendgeräte durch Beamforming voneinander zu trennen.

Bei diesem Beispiel hat sich die Zuordnung zwischen den CDMA-Codes und den Lernsequenzen geändert. Zunächst waren einer Lernsequenz M1 die Codes C1 und C2 zugeordnet, während einer Lernsequenz M2 die CDMA-Codes C3 und C4 zugehörig waren. Der CDMA-Code C3 hat von der Lernsequenz M2 zu der Lernsequenz M1 gewechselt, die nunmehr drei CDMA-Codes aufweist, während die Lernsequenz M2 den CDMA-Code C4 zur Verfügung hat.

Nunmehr kann an der Basisstation die Änderung in der Zuordnung zwischen Lernsequenzen M1, M2 und CDMA-Codes C1, ...., C4, festgestellt werden. Diese Variation in der Zuordnung wird dann Mobilkommunikationsendgeräten in der Funkzelle signalisiert.

Bei einer Ausführungsform erfolgt die Signalisierung an sämtliche Mobilkommunikationsendgeräten in einer Zelle, beispielsweise unter Ausnutzung des Broadcasting-Kanals oder des FACH-Kanals bei UMTS. Sämtliche Mobilkommunikationsendgeräte einer Zelle erhalten die erforderlichen Informationen über verwendete CDMA-Codes und zugehörige Lernsequenzen gleichzeitig und können aufgrund dieser Informationen das Joint-Detection-Verfahren durchführen.

Alternativ können einzelne Mobilkommunikationsendgeräte aus der Funkzelle die zur Durchführung des Joint-Detection-Verfahrens benötigten Informationen über Zuordnungen zwischen Lernsequenzen und CDMA-Codes gezielt bei der Basisstation der Funkzelle nachfragen. In diesem Fall wird die normale Signalisierungsverbindung eines Mobilkommunikationsendgerätes für die Übertragung der Signalisierung von Daten verwendet.

Bei einem weiteren Ausführungsbeispiel der Erfindung werden, wie oben beschrieben, einem Mobilkommunikationsendgerät die CDMA-Code-Lernsequenzen-Zuordnungen sämtlicher anderer Mobilkommunikationsendgeräte mitgeteilt. Nunmehr geht man von der Annahme aus, daß es für die Zuordnungen zwischen CDMA-Codes und Lernsequenzen viele Permutationen gibt, die zur Flexibilität des Systems keinen Beitrag leisten. Dies ist beispielsweise der Fall, wenn bei zwei verschiedenen Permutationen die allgemeine Verteilung von CDMA-Codes auf Lernsequenzen gleichbleibt, d. h. bei beiden Permutationen gibt es gleich viele Lernsequenzen, denen eine identische Anzahl von CDMA-Codes zugeordnet ist. Die Zuordnungen zwischen CDMA-Codes und Lernsequenzen werden strukturiert, und zwar wird einer Permutation eine bestimmte Zeitschlitzkonfiguration zugeordnet, die mit einem bestimmten Code bezeichnet wird.

Wenn nun von einer Anfangs-Zuordnung, wie dem Default Midamble Allocation Scheme ausgegangen wird, kann durch signalisieren des Codes der Zeitschlitzkonfiguration durch die Basisstation jedem Mobilkommunikationsendgerät in einer Funkzelle ein Wechsel zu einer anderen Permutation signalisiert werden.

Bei einem konkreten Beispiel sind in einer Mobilfunkzelle aufgrund der Topologie, die von der Größe der Zelle und den geographischen Eigenschaften der Zelle abhängt, vier Lernsequenzen definiert. Nach dem Default-Midamble-Allocation-Scheme sind jeder Lernsequenz vier CDMA-Codes zugeordnet:
M1: C1, C2, C3, C4
M2: C5, C6, C7, C8
M3: C9, C10, C11, C12
M4: C13, C14, C15 , C16.

Jeder Lernsequenz ist ein Mobilkommunikationsendgerät zugeordnet. Wenn nun ein Mobilkommunikationsendgerät mehr als vier CDMA-Codes benutzen will, so muß es eine zweite Lernsequenz/Midamble benutzen. Unter Verwendung von Beamforming, was bei TD-SCDMA im Ausgangszustand vorhanden ist, können die verbleibenden CDMA-Codes der zweiten Lernsequenz nicht mehr effektiv einem anderen Mobilkommunikationsendgerät zugewiesen werden.

Deshalb sieht der Standard zur effektiveren Nutzung der Ressourcen der Funkzelle das für Mobilkommunikationsendgeräte spezifische Midamble Allocation Scheme vor, das mit einem Joint-Detector-Empfänger in einem Mobilkommunikationsendgerät schwierig zu kombinieren ist, da, wie oben ausgeführt, Informationen über die verwendeten CDMA-Codes und Lernsequenzen der übrigen Mobilkommunikationsendgeräte fehlen.

Bei diesem Ausführungsbeispiel werden daher vorab Zeitschlitzkonfigurationen definiert, die es ermöglichen, die benötigte Anzahl von CDMA-Codes einem Mobilkommunikationsendgerät, d. h. einer Lernsequenz, zuzuweisen. Benötigt beispielsweise ein Mobilkommunikationsendgerät insgesamt sechs CDMA-Codes, so kann die nachstehend dargestellte Zeitschlitzkonfiguration verwendet werden.
M1: C1, C2
M2: C3, C4, C5, C6
M3: C7, C8, C9, C10
M4: C11, C12, C13, C14, C15, C16.

Dies bedeutet, daß die Lernsequenz M3 zwei ihrer CDMA-Codes an die Lernsequenz M4 abgegeben hat, so daß dort nunmehr sechs CDMA-Codes vorhanden sind. Des weiteren hat die Lernsequenz M1 die CDMA-Codes C3 und C4 an die Lernsequenz M2 abgegeben, während die CDMA-Codes C7 und C8 von der Lernsequenz M2 zu der Lernsequenz M3 übertragen worden sind.

Unter der Voraussetzung, daß mit zunehmender Lernsequenznummer die CDMA-Code-Anzahl zunimmt, sind bei vier Lernsequenzen mit insgesamt sechzehn CDMA-Codes vierunddreißig Kombinationen möglich. Die vierunddreißig Kombinationen können durch ein Muster von 6 Bit Länge codiert werden. Der betreffende Code wird von der Basisstation zu einem beispielsweise nachfragenden Mobilkommunikationsendgerät signalisiert. Auf diese Weise verfügt jedes Mobilkommunikationsendgerät über die vollständige Information über gerade verwendete CDMA-Codes und jeweils zugehörige Lernsequenzen. Die Signalisierung der Lernsequenzen und der eigenen Codes eines Mobilkommunikationsendgerätes erfolgt durch die in TDD-Systemen bereits definierten Verfahren zum Verbindungsaufbau (3GPP Spezifikation 25.331, TSM Spezifikation 04.08).

## Patentansprüche

1. Verfahren zum Betrieb eines Mobilfunksystems mit einer Basisstation und mehreren, der Basisstation zugeordneten Mobilkommunikationsendgeräten, denen jeweils mindestens eine Lernsequenz zur Schätzung von Eigenschaften eines zwischen dem der Lernsequenz zugeordneten Kommunikationsendgerät und einer gemeinsamen Basisstation vorliegenden physikalischen Kanals zugeordnet ist, wobei jeder Lernsequenz mindestens ein CDMA-Code zugeordnet ist und jedem Mobilkommunikationsendgerät, seine eigenen, verwendeten CDMA-Codes und seine mindestens eine Lernsequenz bekannt sind,
**dadurch gekennzeichnet,**
**daß** zum Feststellen von während des Betriebs des Mobilfunksystems gerade verwendeten CDMA-Codes mindestens einem Mobilkommunikationsendgerät die Zuordnungen zwischen gerade verwendeten CDMA-Codes und Lernsequenzen für weitere Mobilkommunikationsendgeräte, die der gemeinsamen Basisstation zugeordnet sind, signalisiert werden, und
**daß** die Zuordnungen zwischen Lernsequenzen und CDMA-Codes zeitlich variieren und, ausgehend von Ausgangszuordnungen zwischen den Lernsequenzen und den CDMA-Codes, die Variationen in den Zuordnungen mindestens einem Mobilkommunikationsendgerät, das der gemeinsamen Basisstation zugeordnet ist, signalisiert werden.

2. Verfahren nach Anspruch 1,
**dadurch gekennzeichnet,**
**daß** die Variationen der Zuordnungen zwischen Lernsequenzen und CDMA-Codes über den UMTS-Broadcast-Kanal oder den UMTS-FACH-Kanal sämtlichen, einer gemeinsamen Basisstation zugeordneten Mobilkommunikationsendgeräten signalisiert werden.

3. Verfahren nach Anspruch 1,
**dadurch gekennzeichnet,**
**daß** die Mobilkommunikationsendgeräte, die der gemeinsamen Basisstation zugeordnet sind, im Bedarfsfalle die Signalisierung einer Variation der Zuordnungen zwischen Lernsequenzen und CDMA-Codes anfordern.

4. Verfahren nach einem der Ansprüche 1 bis 3,
**dadurch gekennzeichnet,**
**daß** nicht benötigte CDMA-Codes von der Basisstation nicht gesendet werden und das Mobilkommunikationsendgerät feststellt, ob die signalisierten Zuordnungen von Lernsequenzen zu CDMA-Codes vorhanden sind.

5. Verfahren nach einem der Ansprüche 1 bis 4,
**dadurch gekennzeichnet,**
**daß** jeder Zuordnung von Lernsequenzen zu CDMA-Codes eine bestimmte Zeitschlitzkonfiguration zugeordnet ist.

6. Verfahren nach Anspruch 5,
**dadurch gekennzeichnet,**
**daß** jeder Zeitschlitzkonfiguration ein eigener Signalisierungscode zugeordnet ist, der bei einer Variation der Zuordnung zwischen Lernsequenzen und CDMA-Codes von der Basisstation aus signalisiert wird.

7. Verfahren nach einem der Ansprüche 5 oder 6,
**dadurch gekennzeichnet,**
**daß** die Zuordnung zwischen Lernsequenzen und CDMA-Codes strukturiert ist.

8. Verfahren nach Anspruch 7,
**dadurch gekennzeichnet,**
**daß** mit zunehmender Lernsequenznummer die Anzahl der der Lernsequenz zugeordneten CDMA-Codes zunimmt.

## Claims

1. Method for operating a mobile radio system with a base station and a number of mobile communication terminals assigned to the base station, of which each is assigned at least one learning sequence for estimating characteristics of a physical channel present between the communication terminal assigned the learning sequence and a common base station, with each learning sequence being assigned at least one CDMA code, and its own CDMA codes used and its at least one learning sequence being known to each mobile terminal, **characterized in that,**
to establish CDMA codes currently being used during the operation of the mobile radio system, at least one mobile terminal will be signalled the assignments between the currently used CDMA codes and learning sequences for further mobile terminals which are assigned to the common base station, and that
the assignments between learning sequences and CDMA codes vary over time and, starting from initial assignments between the learning sequences and the CDMA codes, the variations in the assignments to at least one mobile terminal which is assigned to the common base station will be signalled.

2. Method according to claim 1,
**characterised in that**
the variations of the assignments between learning sequences and CDMA codes will be signalled via the UMTS broadcast channel or the UTMS FACH channel to all mobile terminals assigned to a common base station.

3. Method according to claim 1,
**characterised in that,**
the mobile terminals which are assigned to the common base station if need be request the signalling of a variation of the assignments between learning sequences and CDMA codes.

4. Method according to one of claims 1 to 3,
**characterised in that,**
CDMA codes not needed will not be sent by the base station and the mobile terminal determines whether the signalled assignments of learning sequences to CDMA codes are present.

5. Method according to one of claims 1 to 4,
**characterised in that**
each assignment of learning sequences to CDMA codes is assigned a specific time slot configuration.

6. Method according to claim 5,
**characterised in that**
each time slot configuration is assigned its own signaling code which is signalled from the base station if there is a variation of the assignment between learning sequences and CDMA codes.

7. Method according to one of claims 5 or 6,
**characterised in that**
the assignment between learning sequences and CDMA codes is structured.

8. Method according to claim 7,
**characterised in that**
as the learning sequence number increases the number of CDMA codes assigned to the learning sequence increases.

## Revendications

1. Procédé pour faire fonctionner un système de radiotéléphonie mobile comprenant une station de base et plusieurs terminaux de communication mobile associés à la station de base et auxquels est associée à chaque fois au moins une séquence d'apprentissage pour l'évaluation de caractéristiques d'un canal physique existant entre le terminal de communication associé à la séquence d'apprentissage et une station de base commune, au moins un code CDMA étant associé à chaque séquence d'apprentissage et chaque terminal de communication mobile ayant connaissance de ses propres codes CDMA utilisés et de son au moins une séquence d'apprentissage,
**caractérisé en ce que,**
pour déterminer les codes CDMA qui sont justement utilisés pendant le fonctionnement du système de radiotéléphonie mobile, les associations entre les codes CDMA justement utilisés et les séquences d'apprentissage pour d'autres terminaux de communication mobile qui sont associés à la station de base commune sont signalées à au moins un terminal de communication mobile et **en ce que** les associations entre les séquences d'apprentissage et les codes CDMA varient dans le temps et, à partir d'associations de départ entre les séquences d'apprentissage et les codes CDMA, les variations des associations sont signalées à au moins un terminal de communication mobile qui est associé à la station de base commune.

2. Procédé selon la revendication 1,
**caractérisé en ce que**
les variations des associations entre les séquences d'apprentissage et les codes CDMA sont signalées à tous les terminaux de communication mobile associés à une station de base commune sur le canal de radiodiffusion UMTS ou le canal UMTS FACH.

3. Procédé selon la revendication 1,
**caractérisé en ce que**
les terminaux de communication mobile qui sont associés à la station de base commune demandent, en cas de besoin, la signalisation d'une variation des associations entre les séquences d'apprentissage et les codes CDMA.

4. Procédé selon l'une des revendications 1 à 3,
**caractérisé en ce que**
les codes CDMA non nécessaires ne sont pas envoyés par la station de base et le terminal de communication mobile détermine si les associations signalées de séquences d'apprentissage à des codes CDMA existent.

5. Procédé selon l'une des revendications 1 à 4,
**caractérisé en ce**
**qu'**une configuration d'intervalles de temps déterminée est associée à chaque association de séquences d'apprentissage à des codes CDMA.

6. Procédé selon la revendication 5,
**caractérisé en ce que**
l'on associe à chaque configuration d'intervalles de temps un code de signalisation propre qui est signalé par la station de base lors d'une variation de l'association entre des séquences d'apprentissage et des codes CDMA.

7. Procédé selon l'une des revendications 5 ou 6,
**caractérisé en ce que**
l'association entre des séquences d'apprentissage et des codes CDMA est structurée.

8. Procédé selon la revendication 7,
**caractérisé en ce que**
le nombre des codes CDMA associés à la séquence d'apprentissage augmente à mesure que le numéro de la séquence d'apprentissage augmente.
